# EUROPÄISCHE PATENTSCHRIFT

(11) **EP 2 987 078 B1**
(45) Veröffentlichungstag und Bekanntmachung des Hinweises auf die Patenterteilung: **27.02.2019**
(21) Anmeldenummer: 14713037.1
(22) Anmeldetag: 17.03.2014
(51) Int. Cl.: G06F 9/445

(54) **VERFAHREN ZUM BEREITSTELLEN EINER APPLIKATION AUF EINEM SICHERHEITSMODUL SOWIE EIN SOLCHES SICHERHEITSMODUL**
METHOD FOR PROVIDING AN APPLICATION ON A SECURITY MODULE, AND SUCH A SECURITY MODULE
PROCÉDÉ DE CHARGEMENT D'UNE APPLICATION SUR UN MODULE DE SÉCURITÉ ET MODULE DE SÉCURITÉ DE CE TYPE

(30) Priorität: 17.04.2013 DE 102013006621
(43) Veröffentlichungstag der Anmeldung: 24.02.2016
(73) Patentinhaber: Giesecke+Devrient Mobile Security GmbH, 81677 München (DE)
(72) Erfinder: NITSCH, Nils, 85570 Markt Schwaben (DE)
(86) Internationale Anmeldenummer: PCT/EP2014/000720
(87) Internationale Veröffentlichungsnummer: WO 2014/169983

(56) Entgegenhaltungen:
- US-A- 6 101 607

## Beschreibung

### Gebiet der Erfindung

Die Erfindung betrifft ein Verfahren zum Bereitstellen einer Applikation auf einem Sicherheitsmodul sowie ein solches Sicherheitsmodul.

### Hintergrund der Erfindung

Sicherheitsmodule, insbesondere in der Form von Chipkarten bzw. Smartcards, werden heutzutage bei einer Vielzahl von Anwendungen verwendet, wie z.B. in Mobiltelefonen als SIM-Karten oder eUICC-Module, als Bankkarten, als ID-Karten, als Gesundheitskarten und dergleichen. Derartige Sicherheitsmodule umfassen zur Ausführung von entsprechenden Applikationen in der Regel einen Mikroprozessor und eine Mehrzahl von flüchtigen bzw. nicht-flüchtigen Speichern. Als nicht-flüchtiger Speicher kann z.B. ein ROM bzw. ein EEPROM bzw. ein Flash-Speicher vorgesehen sein. Der flüchtige Speicher ist in der Regel als RAM realisiert. Im Gegensatz zu dem nichtflüchtigen Speicher gehen Daten aus dem flüchtigen Speicher verloren, wenn die Ausführung einer Applikation oder eines Prozesses auf dem Sicherheitsmodul beendet wird bzw. die zur Ausführung einer Applikation benötigte Stromversorgung getrennt wird.

Für die Erstellung plattformunabhängiger Applikationen für ein Sicherheitsmodul mit einem Mikroprozessor eignen sich insbesondere objektorientierte Programmiersprachen. Dabei hat sich die Java Card™-Technologie etabliert, die in der Java Card Spezifikation beschrieben wird. In der Java Card Spezifikation werden die Java Card Virtual Machine (JCVM) und die Java Card APIs (APIs = Application Programming Interfaces) definiert, die zusammen die Java Card Laufzeitumgebung (auch als JCRE [Java Card Run-time Environment] bezeichnet) ausmachen. Im Rahmen der vorliegenden Erfindung wird ein Sicherheitsmodul in Form einer Chipkarte, die basierend auf der Java Card Spezifikation arbeitet, als Java Card bzw. Javakarte bezeichnet.

Wie dies dem Fachmann bekannt ist, handelt es sich bei den Java Card APIs um Bibliotheken von Softwaremodulen (auch Klassen genannt), die von der JCVM den auf einer Java Card laufenden Applikationen (auch Applets genannt) zur Ausführung unterschiedlicher Funktionen zur Verfügung gestellt werden. In der Regel hat ein auf einer Java Card laufendes Applet Zugriff auf alle APIs, die von der JCVM zur Verfügung gestellt werden. Dies kann beispielsweise dann problematisch sein, wenn ein Applet erst nachträglich von einer anderen Instanz als dem Kartenherausgeber, z.B. von einem Applet Provider, auf eine Java Card geladen wird, z.B. über die Luftschnittstelle, wenn sich die Java Card bereits im Feld im Einsatz befindet, und dieses Applet dadurch Zugriff auf APIs der Java Card erhält, die dem Applet Zugang zu Geheimnissen, z.B. kryptographischen Schlüsseln, verschafft, die vom Kartenherausgeber auf der Java Card gesichert hinterlegt worden sind.

Aus der "Global Platform"-Spezifikation, die sich bei Javakarten in der Praxis als Standard zur Verwaltung und zum Laden von Java-basierten Applets etabliert hat, ist es bekannt, Applets mit Privilegien zu versehen und in einer "Security Domain" der Java Card zu registrieren. Die Privilegien eines Applets, die in der Regel in einer sogenannten "Card Registry" gespeichert sind, definieren dessen Zugriffsrechte, können jedoch von der Instanz vergeben werden, die das Applet auf die Java Card aufbringt, also z.B. einem Applet Provider. Für weitere Details zu Javakarten, die gemäß dem "Global Plat-form"-Standard ausgestaltet sind, wird auf Abschnitt 13.13 des Buches "Handbuch der Chipkarten", Wolfgang Rankl und Wolfgang Effing, 5. Auflage, Carl Hanser Verlag München, 2008 verwiesen, auf das hiermit vollumfänglich Bezug genommen wird.

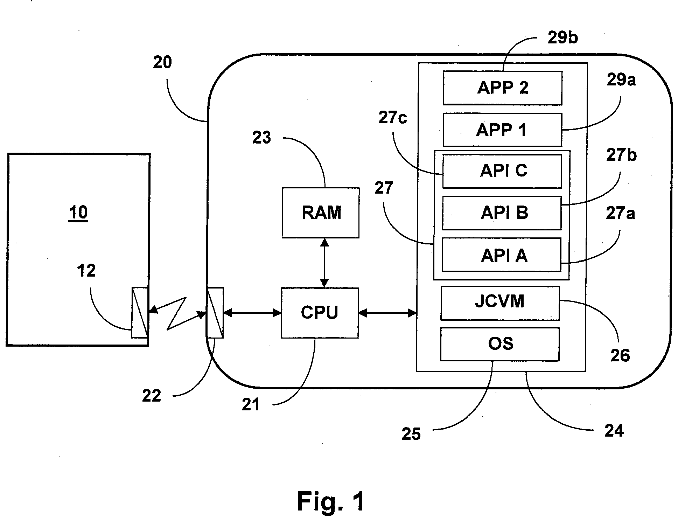

Das Dokument US 6 101 607 A aus dem Stand der Technik offenbart ein Verfahren zum Bereitstellen einer Applikation 56 auf einem Computer 10 mit einem Prozessor, auf dem eine Laufzeitumgebung implementiert ist, die eine Vielzahl von API-Funktionen (mögliche API calls 54, die ein Programmer anlegen kann) zur Nutzung von Funktionen der Laufzeitumgebung durch die Applikation bereitstellt. Das Verfahren umfasst die folgenden Schritte. Das Bereitstellen der Applikation (hier: application program 56) von einem Applikationsbereitsteller (hier: "programmer"), bei dem es sich um eine andere Instanz als den Sicherheitsmodulbereitsteller (hier: "administrator") handelt (Fig. 1A); und das Auswählen der APIs der Vielzahl von APIs, auf welche die Applikation zugreifen können soll, durch den Sicherheitsmodulbereitsteller (Fig. 1B). In US 6 101 607 A wird das Bereitstellen der APIs durch den Administrator dadurch erreicht, dass der Programmer API calls in die Applikation einbindet und der Administrator die Autorisierung des Nutzers für die API calls 54 mittels einer API functions 60 genannten Prüf-Software überprüft, und den Zugriff auf Funktionalitäten der Applikation mittels der API calls nur zulässt, falls der Nutzer über die erforderliche Autorisierung verfügt.

Vor diesem Hintergrund stellt sich der vorliegenden Erfindung die Aufgabe, ein sichereres Verfahren zum Bereitstellen einer Applikation auf einem Sicherheitsmodul sowie ein entsprechend ausgestaltetes Sicherheitsmodul bereitzustellen.

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Die vorliegende Erfindung basiert auf dem Grundgedanken, ein Verfahren zum Bereitstellen einer Applikation auf einem Sicherheitsmodul sowie ein solches Sicherheitsmodul derart auszugestalten, dass der Sicherheitsmodulbereitsteller, d.h. in der Regel der Hersteller und/oder Herausgeber des Sicherheitsmoduls und der darauf implementierten Laufzeitumgebung, insofern die Hoheit über die auf dem Sicherheitsmodul implementierten Applikationen behält, als von diesem ausgewählt werden kann, auf welche APIs der Laufzeitumgebung des Sicherheitsmoduls eine jeweilige Applikation zugreifen kann.

Auf der Basis des vorstehend beschriebenen Grundgedankens wird gemäß einem ersten Aspekt der Erfindung ein Verfahren zum Bereitstellen einer Applikation auf einem Sicherheitsmodul mit einem Prozessor, auf dem eine Laufzeitumgebung implementiert ist, die eine Vielzahl von APIs zur Nutzung von Funktionen der Laufzeitumgebung durch die Applikation bereitstellt. Dabei umfasst das Verfahren die folgenden Schritte: das Bereitstellen der Applikation von einem Applikationsbereitsteller, bei dem es sich um eine andere Instanz als den Sicherheitsmodulbereitsteller handelt; und das Auswählen der APIs der Vielzahl von APIs, auf welche die Applikation zugreifen können soll, durch den Sicherheitsmodulbereitsteller.

Der hierin verwendete Begriff "API" bezeichnet Bibliotheken von Softwaremodulen bzw. Funktionen, die von einer Laufzeitumgebung eines Sicherheitsmoduls einer auf dem Sicherheitsmodul ausgeführten Applikation bereitgestellt werden.

Weiter umfasst der Schritt des Auswählens der APIs der Vielzahl von APIs durch den Sicherheitsmodulbereitsteller ferner den Schritt des Bestimmens eines Berechtigungscodes für die Applikation durch den Sicherheitsmodulbereitsteller, wobei der Berechtigungscode der Applikation definiert, auf welche APIs der Vielzahl von APIs die Applikation zugreifen können soll.

Des Weiteren umfasst das Verfahren die weiteren Schritte des Bestimmens eines Freischaltcodes für die Applikation durch den Sicherheitsmodulbereitsteller und des Überprüfens des Freischaltcodes anhand eines vom Sicherheitsmodul bestimmten Freischaltcodes, wobei das Sicherheitsmodul der Applikation dann Zugriff auf die durch den Berechtigungscode definierten APIs der Vielzahl von APIs gewährt, wenn der vom Sicherheitsmodulbereitsteller bestimmte Freischaltcode gleich dem vom Sicherheitsmodul bestimmten Freischaltcode ist.

Zudem umfasst das Verfahren vor dem Schritt des Bestimmens des Berechtigungscodes für die Applikation durch den Sicherheitsmodulbereitsteller den weiteren Schritt des Übertragens eines Maschinencodes der Applikation vom Applikationsbereitsteller zum Sicherheitsmodulbereitsteller.

Des Weiteren fließt in die Bestimmung des Freischaltcodes durch den Sicherheitsmodulbereitsteller der Berechtigungscode und der Maschinencode der Applikation ein.

Weiter fließt in die Bestimmung des Freischaltcodes ferner ein sicherheitsmodulindividueller Schlüssel ein, den der Sicherheitsmodulbereitsteller mittels eines vom Sicherheitsmodul bereitgestellten Identifikationscodes ermittelt.

Im Detail wird weiter der Freischaltcode bestimmt, indem der Maschinecode der Applikation, der Berechtigungscode und der sicherheitsmodulindividuelle Schlüssel miteinander konkateniert werden und auf das Ergebnis dieser Konkatenation eine schlüssellose Hashfunktion angewendet wird oder indem der Maschinecode der Applikation und der Berechtigungscode miteinander konkateniert werden und auf das Ergebnis dieser Konkatenation eine schlüsselabhängige Hashfunktion unter Verwendung des sicherheitsmodulindividuellen Schlüssels angewendet wird.

Vorzugsweise werden beim Bereitstellen der Applikation von dem Applikationsbereitsteller der Maschinecode der Applikation, der Berechtigungscode und der Freischaltcode an das Sicherheitsmodul übertragen.

Gemäß einem weiteren Aspekt der Erfindung wird ein Sicherheitsmodul mit einem Prozessor bereitgestellt, auf dem eine Laufzeitumgebung implementiert ist, die eine Vielzahl von APIs zur Nutzung von Funktionen der Laufzeitumgebung durch eine Applikation bereitstellt, wobei das Sicherheitsmodul dazu ausgestaltet ist, dass die Applikation von einem Applikationsbereitsteller bereitgestellt wird, bei dem es sich um eine andere Instanz als den Sicherheitsmodulbereitsteller handelt, und wobei das Sicherheitsmodul ferner dazu ausgestaltet ist, dass die APIs der Vielzahl von APIs durch den Sicherheitsmodulbereitsteller ausgewählt werden, auf welche die Applikation zugreifen können soll.

Sicherheitsmodule im Sinne der vorliegenden Erfindung sind Chipkarten, Kreditkarten, elektronische Ausweise, elektronische Reisepässe, Datenspeicherkarten, SIM-Karten, eUICCs und dergleichen.

Vorzugsweise handelt es sich bei dem Sicherheitsmodul um eine Chipkarte, insbesondere in Form einer Java Card, die für eine objektorientierte Programmiersprache eingerichtet ist, bei der Laufzeitumgebung um die Java Card Laufzeitumgebung (Java Card Run-time Environment) und bei der Vielzahl von APIs um die Java Card APIs (Application Programming Interfaces). Entsprechend ist die Applikation als ein auf dem Datenträger ausführbares Java Card Applet ausgebildet. Bestehende Java Card Komponenten können unverändert beibehalten werden. Die beschriebene Erweiterung des bekannten Systems erweitert die Funktionalität des Systems erheblich, während der Aufwand zur Anpassung minimal ist.

Im Fall eines Sicherheitsmoduls in Form einer Chipkarte kann es sich um eine kontaktlose oder kontaktbehaftete Chipkarte handeln oder eine sowohl kontaktlos als auch kontaktbehaftet betreibbare Chipkarte (Dual-Interface-Karte) mit einem beliebigen Format, z.B. nach ISO 7810, z.B. ID-1 (Scheckkartenformat) oder ID-000 (SIM-Karten- oder Minikarten-Format) oder ID-00 oder nach einer anderen Norm.

Wie der Fachmann erkennt, lassen sich die vorstehend beschriebenen bevorzugten Ausgestaltungen sowohl im Rahmen des ersten Aspekts der Erfindung, d.h. im Rahmen des Verfahrens zum Bereitstellen einer Applikation auf einem Sicherheitsmodul, als auch im Rahmen des zweiten Aspekts der Erfindung, d.h. im Rahmen eines entsprechend ausgestalteten Sicherheitsmoduls, vorteilhaft implementieren.

Ein wesentlicher Vorteil der Erfindung besteht darin, dass nicht der Applikationsbereitsteller, d.h. die Instanz, die eine nachzuladende Applikation bereitstellt, sondern der Sicherheitsmodulbereitsteller bestimmen kann, auf welche Funktionen der Laufzeitumgebung des Sicherheitsmoduls die von dem Applikationsbereitsteller auf das Sicherheitsmodul nachgeladene Applikation zugreifen kann. Hierdurch können bestimmte, z.B. sicherheitskritische Funktionalitäten, d.h. APIs, durch den Sicherheitsmodulherausgeber geschützt werden, so dass nur autorisierte Applikationen darauf Zugriff haben.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung einer bevorzugten Ausführungsform eines erfindungsgemäßen Sicherheitsmoduls in Form einer Chipkarte in Kommunikation mit einer externen Instanz in Form eines Lesegeräts bzw. Terminals,
- Fig. 2: eine schematische Darstellung einer bevorzugten Softwarearchitektur des erfindungsgemäßen Sicherheitsmoduls in Form einer Chipkarte von Figur 1 und
- Fig. 3: eine schematische Darstellung eines bevorzugten Ablaufs beim Bereitstellen einer Applikation auf dem erfindungsgemäßen Sicherheitsmodul in Form einer Chipkarte von Figur 1.

Figur 1 zeigt eine schematische Darstellung einer bevorzugten Ausführungsform eines erfindungsgemäßen Sicherheitsmoduls in Form einer Chipkarte 20 in Kommunikation mit einer externen Instanz in Form eines Lesegeräts bzw. Terminals 10. Vorzugsweise ist die Chipkarte 20 als Java Card™ ausgestaltet. Selbstverständlich kann die vorliegende Erfindung jedoch auch in einem Sicherheitsmodul mit einer anderen Bauform und unter Verwendung eines anderen Betriebssystems verwirklicht werden.

Die in Figur 1 dargestellte Chipkarte 20 ist dazu ausgestaltet mit einer externen Instanz in Form eines Lesegeräts bzw. Terminals 10 Daten auszutauschen. Das Lesegerät bzw. Terminal 10 könnte z.B. Teil eines Mobiltelefons sein, in das die Chipkarte 20 in Form einer SIM-Karte eingesteckt ist. Als ein Austausch von Daten wird hier eine Signalübertragung, eine wechselseitige Steuerung und in einfachen Fällen auch eine Verbindung zwischen dem Lesegerät 10 und der Chipkarte 20 verstanden. In der Informationstheorie wird ein Datenaustausch unter anderem durch das Sender-Empfänger-Modell geprägt: Daten bzw. Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht, d.h. die auszutauschenden Daten dekodieren kann.

Zur Datenübertragung bzw. Kommunikation zwischen der Chipkarte 20 und dem Lesegerät 10 weisen sowohl die Chipkarte 20 als auch das Lesegerät 10 geeignete Kommunikationsschnittstellen 22 und 12 auf. Die Schnittstellen 22 und 12 können beispielsweise so ausgestaltet sein, dass die Kommunikation zwischen diesen bzw. zwischen der Chipkarte 20 und dem Lesegerät 10 kontaktlos, d.h. über die Luftschnittstelle, erfolgt. Alternativ kann die Chipkarte 20 über die Schnittstelle 22 galvanisch, d.h. kontaktbehaftet, mit der Schnittstelle 12 des Lesegeräts 10 verbunden werden. In diesem Fall ist die Schnittstelle 22 in der Regel als ein auf einer Seite der Chipkarte 20 angeordnetes Kontaktfeld mit Kontaktflächen zum Datenaustausch mit dem Lesegerät 10 ausgebildet. Selbstverständlich werden von der vorliegenden Erfindung auch Sicherheitsmodule und insbesondere Chipkarten umfasst, die sowohl eine Schnittstelle zur kontaktbehafteten als auch eine Schnittstelle zur kontaktlosen Kommunikation mit einer externen Instanz, beispielsweise in Form eines Lesegeräts aufweisen und die dem Fachmann als Dual-Interface-Chipkarten bekannt sind.

Neben der Schnittstelle 22 zur Kommunikation mit dem Lesegerät 10 umfasst die Chipkarte 20 eine zentrale Prozessor- bzw. Recheneinheit (CPU) 21, die in Kommunikationsverbindung mit der Schnittstelle 22 steht. Die CPU 21 steht ferner mit einem flüchtigen Arbeitsspeicher (RAM) 23 und einem nichtflüchtigen wieder beschreibbaren Speicher 24 in Verbindung. Vorzugsweise handelt es sich bei dem nichtflüchtigen Speicher 24 um einen Flash-Speicher (Flash-EEPROM). Dabei kann es sich beispielsweise um einen Flash-Speicher mit einer NAND- oder einer NOR-Architektur handeln.

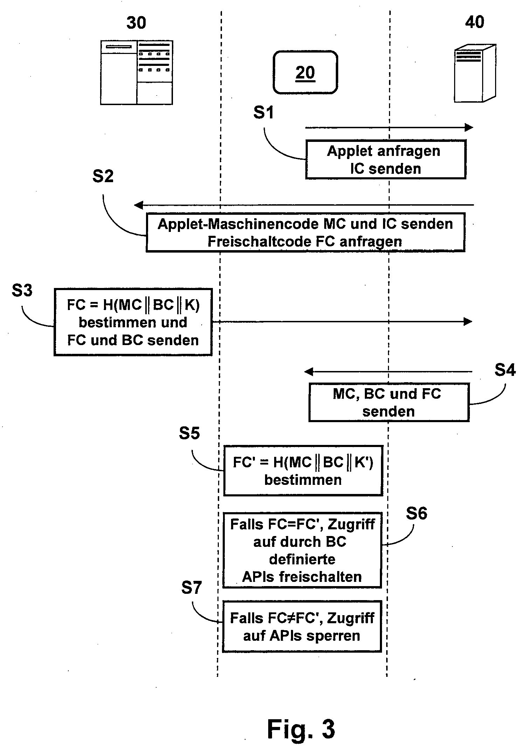

Bei der in Figur 1 dargestellten bevorzugten Ausführungsform der Erfindung, bei der es sich bei der Chipkarte 20 um eine Java Card handelt, ist in dem nichtflüchtigen Speicher 24 der Chipkarte 20 Programmcode gespeichert, der von der CPU 21 ausgeführt werden kann. Insbesondere kann in dem nichtflüchtigen Speicher 24 der Chipkarte 20 der Programmcode des Chipkarten-Betriebssystems 25 (OS), der Java Card Virtual Machine 26 (JCVM), einer Vielzahl von Java Card-APIs 27, von denen drei Java Card-APIs beispielhaft in Figur 3 dargestellt sind, nämlich die Java Card-API 27a (API A), die Java Card-API 27b (API B) und die Java Card-API 27c (API C), sowie beispielhaft einer ersten Applikation 29a (APP 1) und einer zweiten Applikation 29b (APP 2) gespeichert sein. Dabei liegen die erste Applikation 29a (APP 1) und die zweite Applikation 29b (APP 2) vorzugsweise in Form von Java Card™ Applets vor.

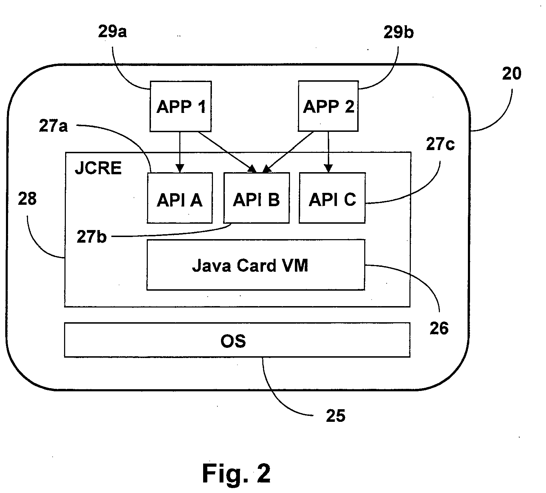

Figur 2 zeigt eine schematische Darstellung einer bevorzugten Softwarearchitektur der erfindungsgemäßen Chipkarte 20 von Figur 1. Dabei setzt eine Java Card Laufzeitumgebung (JCRE) 28 auf dem nativen Betriebssystem 25 (OS) der Chipkarte 20 auf. In der Regel werden das native Betriebssystem 25 (OS) und die Java Card Laufzeitumgebung (JCRE) 28 vom Hersteller bzw. Herausgeber der Chipkarte 20 auf dieser implementiert. Im Rahmen der vorliegenden Beschreibung wird unter dem Begriff "Kartenherausgeber" der Hersteller und/ oder der Herausgeber der Chipkarte 20 verstanden.

Die Java Card Laufzeitumgebung (JCRE) 28 besteht aus der Java Card Virtual Machine 26 (JCVM) sowie einer Vielzahl von Java Card-APIs 27 (auch Klassenbibliotheken genannt), von denen drei beispielhaft in Figur 2 dargestellt sind, nämlich die Java Card-API 27a (API A), die Java Card-API 27b (API B) und die Java Card-API 27c (API C). Wie der Fachmann erkennt, handelt es sich bis hierher im Wesentlichen um die herkömmliche Softwarearchitektur einer Java Card. Für weitere Details hierzu wird auf das Buch "Java Card™ Technology", Zhiqun Chen, Addison-Wesley, 2000 verwiesen, auf das hiermit vollumfänglich Bezug genommen wird.

Erfindungsgemäß ist nun vorgesehen, dass die Chipkarte 20 derart ausgestaltet ist, dass ausgewählt werden kann, auf welche APIs der Vielzahl von Java Card APIs ein auf der Chipkarte 20 implementiertes Applet zugreifen kann. Dies wird in Figur 2 schematisch anhand des Applets 29a (APP 1) und des Applets 29b veranschaulicht. Das Applet 29a (APP 1) ist beispielhaft dazu berechtigt, auf die Java Card-API 27a (API A) und die Java Card-API 27b (API B), aber nicht auf die Java Card-API 27c (API C) zuzugreifen. Das Applet 29b (APP 2) hingegen ist beispielhaft dazu berechtigt, auf die Java Card-API 27b (API B) und die Java Card-API 27c (API C), aber nicht auf die Java Card-API 27a (API C) zuzugreifen. Wie ein Applet erfindungsgemäß diese Berechtigungen erhalten kann, wird nachstehend unter weiterer Bezugnahme auf Figur 3 beschrieben.

Figur 3 zeigt eine schematische Darstellung eines bevorzugten Ablaufs beim Bereitstellen einer Applikation bzw. eines Applets auf dem erfindungsgemäßen Sicherheitsmodul in Form einer Chipkarte 20 von Figur 1. Wie dies in Schritt S1 von Figur 3 dargestellt ist, werden die nachfolgenden der in Figur 3 dargestellten Schritte in der Regel dadurch angestoßen, dass die Chipkarte 20 bei einem Applet Provider 40 ein neues Applet anfragt, beispielsweise um auf zusätzliche Dienste zugreifen zu können, die von diesem Applet bereitgestellt werden. Vorzugsweise identifiziert sich bei dieser Anfrage in Schritt S1 von Figur 1 die Chipkarte 20 gegenüber dem Applet Provider 40, indem die Chipkarte 20 dem Applet Provider 40 in Verbindung mit der Anfrage nach dem neuen Applet einen eindeutigen Identifizierungscode IC sendet.

In Schritt S2 von Figur 3 wird von dem Applet Provider 40, vorzugsweise von einem Server des Applet Providers 40, das Applet, das von der Chipkarte 20 in Schritt S1 angefragt worden ist, an den Herausgeber 30 der Chipkarte 20 geschickt. Vorzugsweise überträgt der Applet Provider 40 dabei den Maschinencode MC des angefragten Applets zusammen mit dem Identifizierungscode IC der Chipkarte 20 an der Kartenherausgeber 30. Es ist jedoch ebenso denkbar, dass das angefragte Applet in einer anderen elektronischen Form als dem Maschinencode MC an den Kartenherausgeber 30 gesendet wird, die eine spätere Ausführung des angefragten Applets auf der Chipkarte 20 erlaubt.

Vorzugsweise beinhaltet das Übersenden des Maschinencodes MC des angefragten Applets in Schritt S2 von Figur 3 ferner die Anfrage an den Kartenherausgeber 30, die vorzugsweise an einen geeignet ausgestalteten Server des Kartenherausgebers 30 gerichtet ist, nach einem Freischaltcode FC zum Freischalten des neuen Applets auf der Chipkarte 20. Auf diese Anfrage in Schritt S2 von Figur 3 hin kann gegebenenfalls eine in Figur 3 nicht dargestellte Authentisierung des Applet Providers 40 gegenüber dem Kartenherausgeber 30 erfolgen, mittels der insbesondere überprüft werden kann, ob der Applet Provider 40 dazu berechtigt ist, das neue Applet auf der Chipkarte 20 zu installieren.

In Schritt S3 von Figur 3 bestimmt der Kartenherausgeber 30 den vom Applet Provider 40 angefragten Freischaltcode FC. Vorzugsweise fließt in die Bestimmung dieses Freischaltcodes FC der Maschinencode MC des neuen Applets, das auf der Chipkarte 20 implementiert werden soll, ein Berechtigungscode BC und ein kryptografischer Schlüssel K ein. Dabei definiert vorzugsweise der vom Kartenherausgeber 30 bereitgestellte Berechtigungscode BC die APIs der auf der Chipkarte 20 implementierten Laufzeitumgebung, auf die das von der Chipkarte 20 angefragte Applet zugreifen können soll. Wie der Fachmann erkennt, könnte es sich bei dem Berechtigungscode BC beispielsweise um eine einfache Bitfolge handeln, wobei die Position eines Bits einer jeweiligen API der Chipkarte 20 entspricht und der Wert eines Bits (0 oder 1) definiert, ob das angefragte Applet auf dieses API zugreifen darf oder nicht.

Bei der in Figur 3 dargestellten bevorzugten Ausführungsform werden in Schritt S3 von Figur 3 der vom Applet Provider 40 bereitgestellte Maschinencode MC des von der Chipkarte 20 angefragten Applets, der vom Kartenherausgeber 30 bereitgestellte Berechtigungscode BC und der beim Kartenherausgeber 30 sicher hinterlegte kryptographische Schlüssel K miteinander konkateniert, was in Figur 3 durch das Zeichen "||" dargestellt ist. Das Ergebnis dieser Konkatenation wird einer Einwegfunktion, vorzugsweise einer Hashfunktion H zugeführt. Vorzugsweise stellt das Ergebnis der Anwendung der Hashfunktion H auf die Konkatenation des Maschinencodes MC, des Berechtigungscodes BC und des kryptographischen Schlüssels K den Freischaltcode FC dar. Dieser vom Kartenherausgeber 30 auf der Grundlage des Maschinencodes MC des angefragten Applets bestimmte Freischaltcode FC wird zusammen mit dem Berechtigungscode BC wieder zurück an den Applet Provider 40 gesendet. Wie der Fachmann erkennen wird, kann der Kartenherausgeber 30 anhand des Identifizierungscodes IC der Chipkarte 20 ermitteln, welcher kartenindividuelle Schlüssel K' auf der Chipkarte 20 hinterlegt ist, um einen korrespondierenden, beim Kartenherausgeber 30 hinterlegten kryptographischen Schlüssel K auszuwählen und mit diesem die Berechnung des Freischaltcodes FC durchzuführen.

In Schritt S4 von Figur 3 sendet der Applet Provider 40 den Maschinencode MC des von der Chipkarte 20 angefragten Applets sowie den Berechtigungscode BC und den Freischaltcode FC an die Chipkarte 20. Um die Korrektheit dieser Daten zu überprüfen, berechnet die Chipkarte 20 in Schritt S5 von Figur 3 zunächst ihrerseits den Freischaltcode FC', indem der Maschinencode MC des angefragten Applets mit dem Berechtigungscode BC und dem auf der Chipkarte 20 hinterlegten kryptographischen Schlüssel K' konkateniert wird und mittels der Hashfunktion H der Hashwert davon berechnet wird, d.h. FC'=H(MC||BC||K').

Anschließend wird in Schritt S6 von Figur 3 der Freischaltcode FC', der von der Chipkarte 20 auf der Grundlage des darauf hinterlegten kryptographischen Schlüssels K' bestimmt worden ist, mit dem Freischaltcode FC verglichen, welcher der Chipkarte 20 von dem Applet Provider 40 in Schritt S4 von Figur 3 gesendet worden ist und vorher in Schritt S3 vom Kartenherausgeber 30 auf der Grundlage des kryptographischen Schlüssels K bestimmt worden ist. Ergibt dieser Vergleich, dass die Freischaltcodes FC und FC' identisch sind, wird in Schritt S6 von Figur 3 der Zugriff auf die durch den Berechtigungscode BC definierten APIs der Chipkarte 20 freigeschaltet. Andernfalls, d.h. bei einer Abweichung des Freischaltcodes FC' vom Freischaltcode FC, wird in Schritt S7 von Figur 3 der Zugriff des Applets auf die APIs der Chipkarte 20 gesperrt. Vorzugsweise wird in diesem Fall eine entsprechende Fehlermeldung an den Applet Provider 40 gesendet.

Zur Durchführung der in Figur 3 dargestellten Schritte S5, S6 und S7 weist die Chipkarte 20 vorzugsweise eine Prüfungs- und Freischalteinrichtung auf, die beispielsweise eine Security Domain umfassen kann, wie diese aus dem "Global Platform"-Standard bekannt ist. Alternativ oder zusätzlich kann die Prüfungs- und Freischalteinrichtung als eine vom Kartenherausgeber 30 bereitgestellte Erweiterung der Laufzeitumgebung, d.h. im bevorzugten Fall der Chipkarte 20 der Java Card Laufzeitumgebung (JCRE) 28 implementiert sein.

Der Fachmann wird erkennen, dass die vorliegende Erfindung nicht auf die in Figur 3 dargestellte bevorzugte Abfolge und die dort gezeigten Details beschränkt ist. Beispielsweise könnte der Freischaltcode FC auf eine andere Art und Weise bestimmt werden, als wie dies in Figur 3 dargestellt ist und vorstehend beschrieben worden ist.

Neben dem Maschinencode, dem Berechtigungscode BC und dem kryptographischen Schlüssel K könnte beispielsweise der vom Applet Provider 40 gesendete Identifizierungscode IC in die Bestimmung des Freischaltcodes FC einfließen. Gemäß einer weiteren Alternative könnte statt einer schlüssellosen Hashfunktion H, in die der beim Kartenherausgeber 30 hinterlegte, kryptographische Schlüssel K durch die Konkatenation eingeht, auch eine schlüsselabhängige Hashfunktion bzw. ein Message Authentication Code (MAC), beispielsweise ein CMAC (Cipher-based MAC) verwendet werden. Wesentlich für die Erfindung ist lediglich, dass die Chipkarte 20 überprüfen kann, dass der Maschinencode MC und der Berechtigungscode BC, die die Chipkarte 20 vom Applet Provider 40 in Schritt S4 von Figur 3 erhalten hat, mit dem Maschinencode MC und dem Berechtigungscode BC übereinstimmt, den der Applet Provider 40 in Schritt S2 von Figur 3 an den Kartenherausgeber 30 gesendet hat bzw. den der Kartenherausgeber 30 in Schritt S3 von Figur 3 an den Applet Provider 40 gesendet hat.

## Patentansprüche

1. Verfahren zum Bereitstellen einer Applikation (29a, 29b) auf einem Sicherheitsmodul (20) mit einem Prozessor (21), auf dem eine Laufzeitumgebung (28) implementiert ist, die eine Vielzahl von APIs (27a, 27b, 27c) zur Nutzung von Funktionen der Laufzeitumgebung (28) durch die Applikation (29a, 29b) bereitstellt, wobei das Verfahren die folgenden Schritte umfasst:
das Bereitstellen der Applikation (29a, 29b) von einem Applikationsbereitsteller (40), bei dem es sich um eine andere Instanz als den Sicherheitsmodulbereitsteller (30) handelt; und
das Auswählen der APIs der Vielzahl von APIs, auf welche die Applikation (29a, 29b) zugreifen können soll, durch den Sicherheitsmodulbereitsteller (30);
wobei der Schritt des Auswählens der APIs der Vielzahl von APIs durch den Sicherheitsmodulbereitsteller (30) den Schritt des Bestimmens eines Berechtigungscodes (BC) für die Applikation (29a, 29b) durch den Sicherheitsmodulbereitsteller (30) umfasst, wobei der Berechtigungscode (BC) der Applikation (29a, 29b) definiert, auf welche APIs der Vielzahl von APIs (27a, 27b, 27c) die Applikation (29a, 29b) zugreifen kann;
wobei das Verfahren die weiteren Schritte des Bestimmens eines Freischaltcodes (FC) für die Applikation (29a, 29b) durch den Sicherheitsmodulbereitsteller (30) und des Überprüfens des Freischaltcodes (FC) anhand eines vom Sicherheitsmodul (20) bestimmten Freischaltcodes (FC') umfasst, wobei das Sicherheitsmodul (20) der Applikation (29a, 29b) dann Zugriff auf die durch den Berechtigungscode (BC) definierten APIs der Vielzahl von APIs (27a, 27b, 27c) gewährt, wenn der vom Sicherheitsmodulbereitsteller (30) bestimmte Freischaltcode (FC) gleich dem vom Sicherheitsmodul (20) bestimmten Freischaltcode (FC') ist;
wobei das Verfahren vor dem Schritt des Bestimmens des Berechtigungscodes (BC) für die Applikation (29a, 29b) durch den Sicherheitsmodulbereitsteller (30) den weiteren Schritt des Übertragens eines Maschinencodes (MC) der Applikation (29a, 29b) vom Applikationsbereitsteller (40) zum Sicherheitsmodulbereitsteller (30) umfasst;
wobei in die Bestimmung des Freischaltcodes (FC) durch den Sicherheitsmodulbereitsteller (30) der Berechtigungscode (BC) und der Maschinencode (MC) der Applikation (29a, 29b) einfließt;
wobei in die Bestimmung des Freischaltcodes (FC) ferner ein sicherheitsmodulindividueller Schlüssel (K) einfließt, den der Sicherheitsmodulbereitsteller (30) mittels eines vom Sicherheitsmodul (20) bereitgestellten Identifikationscodes (IC) ermittelt;
wobei der Freischaltcode (FC) bestimmt wird, indem der Maschinecode (MC) der Applikation (29a, 29b), der Berechtigungscode (BC) und der sicherheitsmodulindividuelle Schlüssel (K) miteinander konkateniert werden und auf das Ergebnis dieser Konkatenation eine schlüssellose Hashfunktion angewendet wird oder indem der Maschinecode (MC) der Applikation (29a, 29b) und der Berechtigungscode (BC) miteinander konkateniert werden und auf das Ergebnis dieser Konkatenation eine schlüsselabhängige Hashfunktion unter Verwendung des sicherheitsmodulindividuellen Schlüssels (K) angewendet wird.

2. Verfahren nach Anspruch 1, wobei beim Bereitstellen der Applikation (29a, 29b) von dem Applikationsbereitsteller (40) der Maschinecode (MC) der Applikation (29a, 29c), der Berechtigungscode (BC) und der Freischaltcode (FC) an das Sicherheitsmodul (20) übertragen werden.

3. Verfahren nach einem der vorhergehenden Ansprüche, wobei es sich bei dem Sicherheitsmodul (20) um eine Java Card, bei der Laufzeitumgebung (28) um die Java Card Laufzeitumgebung (Java Card Run-time Environment) und bei der Vielzahl von APIs (27a, 27b, 27c) um die Java Card APIs (Application Programming Interfaces) handelt.

4. Sicherheitsmodul (20) mit einem Prozessor (21), auf dem eine Laufzeitumgebung (28) implementierbar ist, die eine Vielzahl von APIs (27a, 27b, 27c) zur Nutzung von Funktionen der Laufzeitumgebung (28) durch eine Applikation (29a, 29b) bereitstellt, wobei das Sicherheitsmodul (20) dazu ausgestaltet ist, dass die Applikation (29a, 29b) von einem Applikationsbereitsteller (40) bereitgestellt wird, bei dem es sich um eine andere Instanz als den Sicherheitsmodulbereitsteller (30) handelt, und wobei das Sicherheitsmodul (20) ferner dazu ausgestaltet ist, dass die APIs der Vielzahl von APIs, auf welche die Applikation (29a, 29b) zugreifen können soll, durch den Sicherheitsmodulbereitsteller (30) ausgewählt werden, mittels eines Verfahrens gemäß einem der Ansprüche 1 bis 3.

## Claims

1. A method for supplying an application (29a, 29b) on a security module (20) having a processor (21), on which a runtime environment (28) is implemented, which supplies a plurality of APIs (27a, 27b, 27c) for utilizing functions of the runtime environment (28) by the application (29a, 29b), wherein the method comprises the following steps:
the supplying of the application (29a, 29b) from an application supplier (40) which is an entity other than the security-module supplier (30); and
the selecting of the APIs of the plurality of APIs, which the application (29a, 29b) should be able to access, by the security-module supplier (30);
wherein the step of the selecting of the APIs of the plurality of APIs by the security-module supplier (30) comprises the step of the determining of an authorization code (BC) for the application (29a, 29b) by the security-module supplier (30), wherein the authorization code (BC) of the application (29a, 29b) defines which APIs of the plurality of APIs (27a, 27b, 27c) the application (29a, 29b) can access;
wherein the method comprises the further steps of the determining of a release code (FC) for the application (29a, 29b) by the security-module supplier (30) and the checking of the release code (FC) with the help of a release code (FC') determined by the security module (20), wherein the security module (20) then grants the application (29a, 29b) access to the APIs of the plurality of APIs (27a, 27b, 27c) defined by the authorization code (BC) if the release code (FC) determined by the security-module supplier (30) is equal to the release code (FC') determined by the security module (20);
wherein the method comprises, before the step of the determining of the authorization code (BC) for the application (29a, 29b) by the security-module supplier (30), the further step of the transferring of a machine code (MC) of the application (29a, 29b) from the application supplier (40) to the security-module supplier (30);
wherein into the determining of the release code (FC) by the security-module supplier (30), the authorization code (BC) and the machine code (MC) of the application (29a, 29b) are incorporated;
wherein into the determining of the release code (FC) further a key (K) individual to the security module is incorporated which the security-module supplier (30) establishes by means of an identification code (IC) supplied by the security module to (20);
wherein the release code (FC) is determined by mutually concatenating the machine code (MC) of the application (29a, 29b), the authorization code (BC) and the key (K) individual to the security module, and applying a keyless hash function to the result of this concatenation, or by mutually concatenating the machine code (MC) of the application (29a, 29b) and the authorization code (BC), and applying a key-dependent code while employing the key (K) individual to the security module to the result of this concatenation.

2. The method according to claim 1, wherein upon supplying the application (29a, 29b) from the application supplier (40), the machine code (MC) of the application (29a, 29c), the authorization code (BC) and the release code (FC) are transferred to the security module (20).

3. The method according to any of the preceding claims, wherein the security module (20) is a Java Card, the runtime environment (28) is the Java Card Runtime Environment, and the plurality of APIs (27a, 27b, 27c) are the Java Card APIs (Application Programming Interfaces).

4. A security module (20) having a processor (21) on which a runtime environment (28) is implementable which supplies a plurality of APIs (27a, 27b, 27c) for utilizing functions of the runtime environment (28) by an application (29a, 29b), wherein the security module (20) is devised such that the application (29a, 29b) is supplied by an application supplier (40) which is an entity other than the security-module supplier (30), and wherein the security module (20) is further devised such that the APIs of the plurality of APIs, which the application (29a, 29b) should be able to access, are selected by the security-module supplier (30) by means of a method according to any of claims 1 to 3.

## Revendications

1. Procédé de mise à disposition d'une application (29a, 29b) sur un module de sécurité (20) ayant un processeur (21) sur lequel est mis en oeuvre un environnement d'exécution (28) qui met à disposition une pluralité de APIs (27a, 27b, 27c) pour l'utilisation de fonctions de l'environnement d'exécution (28) par l'application (29a, 29b), le procédé comprenant les étapes suivantes :
la mise à disposition de l'application (29a, 29b) par un fournisseur d'application (40) qui consiste en une autre instance que le fournisseur de module de sécurité (30) ; et
la sélection des APIs de la pluralité de APIs auxquelles l'application (29a, 29b) doit pouvoir accéder, par le fournisseur de module de sécurité (30) ;
cependant que l'étape de la sélection des APIs de la pluralité de APIs par le fournisseur de module de sécurité (30) comprend l'étape de la détermination d'un code d'autorisation (BC) pour l'application (29a, 29b) par le fournisseur de module de sécurité (30), cependant que le code d'autorisation (BC) de l'application (29a, 29b) définit auxquelles APIs de la pluralité de APIs (27a, 27b, 27c) l'application (29a, 29b) peut accéder ;
cependant que le procédé comprend les autres étapes de la détermination d'un code de déblocage (FC) pour l'application (29a, 29b) par le fournisseur de module de sécurité (30) et de la vérification du code de déblocage (FC) au moyen d'un code de déblocage (FC') déterminé par le module de sécurité (20), cependant que le module de sécurité (20) accorde ensuite à l'application (29a, 29b) un accès aux APIs de la pluralité de APIs (27a, 27b, 27c) définies par le code d'autorisation (BC) si le code de déblocage (FC) déterminé par le fournisseur de module de sécurité (30) est identique au code de déblocage (FC') déterminé par le module de sécurité (20) ;
cependant que le procédé, avant l'étape de la détermination du code d'autorisation (BC) pour l'application (29a, 29b) par le fournisseur de module de sécurité (30), comprend l'autre étape de la transmission d'un code machine (MC) de l'application (29a, 29b) par le fournisseur d'application (40) au fournisseur de module de sécurité (30) ;
cependant que, dans la détermination du code de déblocage (FC) par le fournisseur de module de sécurité (30), le code d'autorisation (BC) et le code machine (MC) de l'application (29a, 29b) sont pris en compte ;
cependant que, dans la détermination du code de déblocage (FC), en outre une clé (K) individuelle au module de sécurité est prise en compte, laquelle est établie par le fournisseur de module de sécurité (30) au moyen d'un code d'identification (IC) mis à disposition par le module de sécurité (20) ;
cependant que le code de déblocage (FC) est déterminé en ce que le code machine (MC) de l'application (29a, 29b), le code d'autorisation (BC) et la clé (K) individuelle au module de sécurité sont concatenés ensemble, et que, au résultat de cette concaténation, une fonction de hachage sans clé est appliquée, ou en ce que le code machine (MC) de l'application (29a, 29b) et le code d'autorisation (BC) sont concatenés ensemble et que, au résultat de cette concaténation, une fonction de hachage dépendante d'une clé est appliquée en utilisant la clé (K) individuelle au module de sécurité.

2. Procédé selon la revendication 1, cependant que, lors de la mise à disposition de l'application (29a, 29b), par le fournisseur d'application (40), le code machine (MC) de l'application (29a, 29b), le code d'autorisation (BC) et le code de déblocage (FC) sont transmis au module de sécurité (20).

3. Procédé selon une des revendications précédentes, cependant que le module de sécurité (20) consiste en une Java Card, l'environnement d'exécution (28) en l'environnement d'exécution Java Card (Java Card Run-time Environment), et la pluralité de APIs (27a, 27b, 27c) en les APIs Java Card (Application Programming Intefaces).

4. Module de sécurité (20) ayant un processeur (21) sur lequel peut être mis en oeuvre un environnement d'exécution (28) qui met à disposition une pluralité de APIs (27a, 27b, 27c) pour l'utilisation de fonctions de l'environnement d'exécution (28) par une application (29a, 29b), cependant que le module de sécurité (20) est conçu pour que l'application (29a, 29b) soit mise à disposition par un fournisseur d'application (40) qui consiste en une autre instance que le fournisseur de module de sécurité (30), et cependant que le module de sécurité (20) est en outre conçu pour que les APIs de la pluralité de APIs auxquelles l'application (29a, 29b) doit pouvoir accéder soient sélectionnées par le fournisseur de module de sécurité (30) au moyen d'un procédé selon une des revendications de 1 à 3.
